# EUROPÄISCHE PATENTSCHRIFT

(11) **EP 1 203 716 B1**
(45) Veröffentlichungstag und Bekanntmachung des Hinweises auf die Patenterteilung: **29.12.2004**
(21) Anmeldenummer: 01125204.6
(22) Anmeldetag: 24.10.2001
(51) Int. Cl.: B64D 9/00, B64C 1/00, B64C 1/20

(54) **Verfahren und Vorrichtung zum Beladen eines Flugzeuges**
Method and device for loading an aircraft
Procédé et dispositif pour le chargement d'un aéronef

(30) Priorität: 04.11.2000 DE 10054821
(43) Veröffentlichungstag der Anmeldung: 08.05.2002
(73) Patentinhaber: Wittenstein AG, 97999 Igersheim (DE)
(72) Erfinder: Wittenstein, Manfred, 97980 Bad Mergentheim (DE); Spohr, Hans-Hermann, 75395 Calw (DE); Smith, Kenneth, 71032 Böblingen (DE)
(74) Vertreter: Weiss, Peter, Dr.

(56) Entgegenhaltungen:
- EP-A- 0 355 251
- DE-A- 4 136 972
- GB-A- 2 043 584
- US-A- 3 356 236
- US-A- 3 565 233
- US-A- 4 050 655

## Beschreibung

Die Erfindung betrifft ein Verfahren und eine Vorrichtung zum Beladen eines Flugzeuges mit Ladecontainern, wobei diese auf Förderelementen in das Innere des Flugzeugs gelangen und dort gedreht werden, sowie eine Vorrichtung hierfür.

Flugzeuge, gleich welcher Art, transportieren heute eine Vielzahl von Lasten, welche in der Regel in Ladecontainer eingebracht sind. Diese Ladecontainer weisen eine bestimmte Form auf, die in geeignetem Umfang dem Inneren des Flugzeugrumpfes angepasst ist. Oberstes Ziel ist dabei, den zur Verfügung stehenden Raum möglichst weitgehend auszunutzen. Dies führt auch dazu, dass die Ladebereiche, in denen die Ladecontainer manipuliert werden, selbst so klein wie möglich gehalten werden, damit so viel Raum wie möglich zum Lagern selbst verwendet werden kann.

Auch die Ladepforten, die zum Ladebereich führen, sind möglichst klein gehalten, wobei sie in der Regel eine Breite aufweisen, die nur geringfügig grösser ist als die Breite des Ladecontainers. Das bedeutet, dass der Ladecontainer nur mit der schmalen Seite durch die Ladepforte passt, dann aber um etwa 90° gedreht werden muss, damit er in Längsrichtung des Flugzeuges weiter bewegt werden kann.

Das Einbringen, Drehen und Weiterbefördern der Ladecontainer geschieht noch heute manuell, was einen erheblichen Personalaufwand bedeutet. Ferner ist es sehr schwierig, den Ladecontainer im Ladebereich zu drehen, ohne ihn mehrfach anzuecken.

Die US 4,050,655 beschreibt ein System, bei welchem ein Container lotrecht in einen Frachtraum eingeführt wird, und dann gegenüber einem Anschlag durch Bewegen von Förderelementen in den Frachtraum eingedreht wird.

Die EP 0 355 251 A1 zeigt eine Antriebsrolleneinheit, die in Flugzeugfrachträumen herkömmlicherweise integriert eingebaut sind.

Die GB 2 043 584 A offenbart ein Frachtladesystem für Grossraumflugzeuge, wobei Regelelemente manuell oder halbautomatisch aus oder in den Wirkbereich zur Verriegelung von Container in den Frachtraum ein- oder ausgefahren werden können.

Eine Vorrichtung zum Positionieren von Lasten in Flugzeugfrachträumen offenbart die DE 41 36 972 A1, bei welcher lediglich eine linare Bewegung des Containers im Frachtraum über entsprechende PDU's gesteuert wird.

Der vorliegenden Erfindung liegt die Aufgabe zugrunde, ein Verfahren und eine Vorrichtung der oben genannten Art zu entwickeln, mit denen ein Beladen eines Flugzeuges auf vollautomatischem Weg und ohne Beschädigung von Ladecontainer und/oder Ladebereich möglich wird.

Zur Lösung dieser Aufgabe führen die Merkmale der Kennzeichen der Patentansprüche 1 und 5.

Das bedeutet, dass das Beladen eines Flugzeuges mit Ladecontainern auf automatischem Wege erfolgen kann, da eine ständige Abgleichung zwischen den Sensorwerten und den Förderelementen stattfindet. Die Sensorelemente lassen es ebenfalls nicht zu, dass der Ladecontainer im Inneren des Flugzeuges aneckt, so dass Gefährdungen von anderen Bauteilen im Flugzeug ausgeschlossen sind.

Das Drehen des Ladecontainers erfolgt vollautomatisch, seine Lageermittlung berührungslos.

Der Ladecontainer wird in den Ladebereich eingefahren, bis er einen vorbestimmten Abstand von einem stirnwärtigen Referenzpunkt, beispielsweise einer Stirnwand, erreicht hat. Diesen Abstand ermittelt der Sensor. Danach werden seitlich ausgerichtete Förderelemente in Gang gesetzt, welche den Ladecontainer ein Stück weit drehen. Gleichzeitig oder danach können wiederum Förderelemente den Ladecontainer etwas tiefer in den Ladebereich, d.h. beispielsweise gegen eine Stirnwand hin befördern, bevor die seitlich ausgerichteten Förderelemente den Ladecontainer wieder ein Stück weiter drehen. Sensoren sind dabei vorgesehen, um den seitlichen Abstand des Ladecontainers ebenfalls zu ermitteln.

Es versteht sich dabei von selbst, dass zumindest die seitlich ausgerichteten Förderelemente mit unterschiedlichen Geschwindigkeiten drehen können, je nachdem, wie weit sie von einem Drehpunkt für den Ladecontainer entfernt sind. Die Förderelemente nahe der sich im Ladebereich befindlichen Stirnwand des Ladecontainers dürften am schnellsten betrieben werden.

Auf diese Weise ist es möglich, den Ladecontainer in eine gewünschte Lage zu drehen, in der er dann in Längsrichtung des Flugzeuges weiter befördert werden kann.

Eine entsprechende Vorrichtung zur Durchführung des Verfahrens weist Sensoren zur Bestimmung der Lage des Containers auf. Diese Sensoren können entweder am Ladecontainer selbst angeordnet sein oder aber im Ladebereich, beispielsweise an entsprechenden Stirn- bzw. Seitenwänden oder Stirn- bzw. Seitenstreben.

Bei den Sensoren handelt es sich bevorzugt um Annäherungssensoren, sie können mit Ultraschall, Radar od.dgl. arbeiten. Ultraschallsensoren haben beispielsweise den Vorteil, dass sie völlig wetterunabhängig sind.

In welcher Höhe die Sensoren angeordnet sind, hängt von der Form des Ladecontainers ab.

Die Dreharbeit wird von den Förderelementen übernommen, wobei zumindest Teile dieser Förderelemente mit einem Antrieb versehen sind. Bevorzugt handelt es sich bei den Förderelementen um die bekannten PDU's (power drive units). Die PDU's sind aktive Antriebseinrichtungen, die ggf. auch kontinuierlich verdrehbar zwischen passiven Rollenbahnen angeordnet sind, um den Ladecontainer kontinuierlich in den Innenraum zu befördern. Diese sitzen zwischen passiven Rollenbahnen, bei denen jeweils aufeinander folgende Bahnen senkrecht zueinander angeordnet sind. Das bedeutet, dass Rollenbahnen zum Transport des Ladecontainers in Eintrittsrichtung in den Ladebereich parallel zu dieser Eintrittsrichtung verlaufen, während Rollenbahnen zum senkrechten Versatz des Ladecontainers in Eintrittsrichtung verlaufen. Es können auch Kugelmattenbereiche vorgesehen sein, insbesondere im Öffnungsbereich, in welchem der Ladecontainer gedreht bzw. in den Laderaum eingebracht wird.

Wichtig ist die Abstimmung der Förderelemente mit den Sensoren, was über eine Steuerung geschieht, welche die in Abhängigkeit von der von den Sensoren ermittelten Lage des Lagecontainers jeweils in Tätigkeit zu versetzenden Förderelemente anspricht. Durch eine entsprechende Anzahl von Sensoren ist es möglich, die Lage des Containers während des Lade- und Drehvorganges kontinuierlich zu erfassen und die Belademechanik dann entsprechend anzusteuern und zu regeln. Das Ganze erfolgt vollautomatisch und, da die Sensoren bevorzugt berührungslos arbeiten, ohne die Gefahr von Beschädigungen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht eines Flugzeuges;
Figur 2 einen Querschnitt durch das Flugzeug gemäss Figur 1;
Figuren 3 und 4 teilweise dargestellte Querschnitte durch das Flugzeug gemäss Figur 1, beladen mit unterschiedlichen Ladecontainern;
Figur 5 eine schematisch dargestellte Draufsicht auf einen Ladebereich des Flugzeuges;
Figur 6 eine schematisch dargestellte Seitenansicht des Ladebereiches.

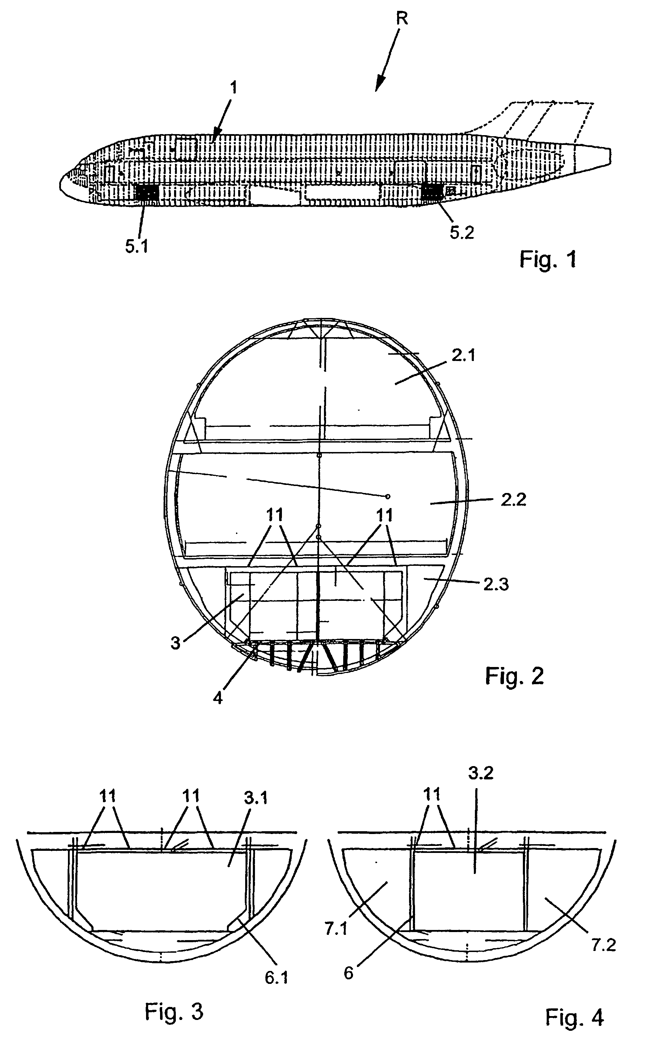

Ein Flugzeug R weist gemäss Figur 1 einen Rumpf 1 auf, der gemäss Figur 2 im gezeigten Ausführungsbeispiel in drei Ebenen 2.1, 2.2 und 2.3 unterteilt ist. Die Ebene 2.3 ist zum Beladen mit Ladecontainern 3 vorgesehen, wobei diese Ladecontainer 3 auf entsprechenden Rollenbahnen 4 in Längsrichtung des Flugzeuges R bewegt werden können.

Die Beladung des Flugzeuges R findet über zwei Ladepforten 5.1 und 5.2 statt.

In den Figuren 3 und 4 sind zwei verschiedene Formen von Ladecontainern 3.1 und 3.2 angedeutet, die je nach dem im Flugzeug zur Verfügung stehenden Platz angeordnet werden. Beispielsweise ist der mit Ladecontainer 3.2 zu belegende Laderaum 6 gemäss Figur 4 kleiner als der Laderaum 6.1 gemäss Figur 3. Dies liegt daran, dass freie Räume 7.1 und 7.2 neben dem Raum 6 beispielsweise zur Aufnahme vom Fahrwerk od.dgl. dienen können.

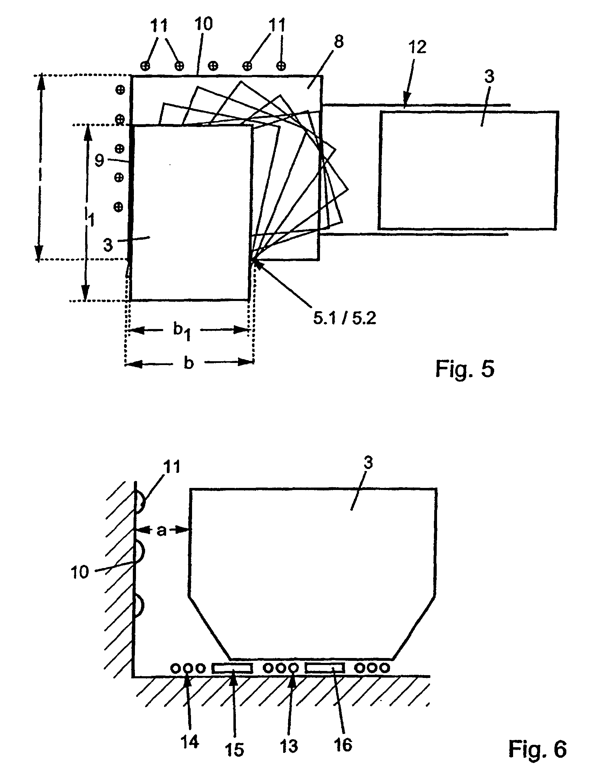

Gemäss Figur 5 folgt auf eine Ladepforte 5.1/5.2 ein schematisch angedeuteter Ladebereich 8. Dabei ist eine Breite b der Ladepforte 5.1/5.2 nur geringfügig grösser als eine Breite b₁ des Ladecontainers 3. Auch eine Eintrittslänge L des Ladebereichs 8 ist nur geringfügig grösser als eine Länge l₁ des Ladecontainers 3.

An einer Seitenwand 9 und einer Stirnwand 10 des Ladebereichs 8 sind Sensoren 11 angedeutet. Seitlich schliesst an den Ladebereich 8 ein verlängerter Cargoraum 12 an. Die Sensoren 11 können auch in der Decke des Cargoraumes 12 bspw. gitterartig verteilt angeordnet sein, um die Bewegung und Position des Ladecontainers 3 zu erkennen und mittels der PDU's aktiv zu bewegen, wie es in den Figuren 2 bis 4 angedeutet ist. Dabei soll ebenfalls im Rahmen der vorliegenden Erfindung liegen, die Sensoren 11 an der Seitenwand 9, Stirnwand 10 und/oder an der Decke des Cargoraumes 12 über den vollständigen Cargoraum 12 anzuordnen bzw. zu versehen.

Gemäss Figur 6 befinden sich unter dem Ladecontainer 3 Förderelemente 13. Diese können im gezeigten Ausführungsbeispiel aus Rollenbahnen 14 und 15 bestehen, die jeweils senkrecht zueinander angeordnet sind, wobei einzelne Rollen 16 sowohl von Rollenbahn 14 als auch von Rollenbahn 15 angetrieben sind.

Die Funktionsweise der vorliegenden Erfindung ist folgende:

Da die Breite b der Ladepforte 5.1/5.2 nur geringfügig grösser ist als die Breite b₁ des Ladecontainers 3, kann dieser nur mit der schmalen Seite durch die Ladepforte 5.1/5.2 in den Ladebereich 8 eintreten. Da ferner der verlängerte Cargoraum 12, durch den der Ladecontainer 3 transportiert werden muss, etwa senkrecht zur Eintrittsposition des Ladecontainers 3 in den Ladebereich 8 angeordnet ist, muss der Ladecontainer 3 im Ladebereich 8 etwa um 90° gedreht werden. Zu diesem Zwecke ermitteln die Sensoren 11 die Lage des Ladecontainers 3 und steuern über eine entsprechende Steuerung die Förderelemente 13 so an, dass der Ladecontainer 3 in mehreren Anläufen, die in Figur 5 gestrichelt dargestellt sind, gedreht wird.

Das heisst, der Ladecontainer 3 tritt durch die Ladepforte 5.1/5.2 in den Ladebereich 8 ein. Einer oder mehrere der Sensoren 11 an der Stirnwand 10 ermitteln einen Abstand des Ladecontainers 3 von dieser Stirnwand 10. Die Beförderung des Ladecontainers 3 wird von den Rollenbahnen 14 übernommen, die parallel zur Einlaufrichtung des Ladecontainers 3 angeordnet sind.

Ermitteln die Sensoren 11 einen bestimmten Abstand a des Ladecontainers 3 von der Stirnwand 10, so werden die Rollenbahnen 15 in Gang gesetzt, deren Rollen in Einlaufrichtung des Ladecontainers 3 verlaufen. Vor allem gilt dies für die Rollenbahnen 15, die nahe der Stirnwand 10 angeordnet sind. Auf diese Weise dreht der vordere Teil des Ladecontainers 3 in Richtung des Cargoraumes 12, wobei die Rollenbahnen 14 still gesetzt oder verlangsamt werden. Sie werden dann wieder in Gang gesetzt, wenn Sensoren 11 an der Seitenwand 9 einen bestimmten Abstand des Ladecontainers 3 von der Seitenwand 9 feststellen. Hierdurch rückt der Ladecontainer wieder ein Stück weiter in den Ladebereich 8 hinein, so dass sein vorderer Bereich nach Feststellung eines vorgegebenen Abstandes von den Sensoren 11 an der Stirnfläche 10 wieder weiter gedreht werden kann. Dies geschieht so lange, bis sich der Ladecontainer 3 in einer Lage befindet, dass er in den verlängerten Cargoraum 12 einlaufen kann.

| **Positionszahlenliste** | | | | | |
|---|---|---|---|---|---|
| 1 | Rumpf | 34 | | 67 | |
| 2 | Ebene | 35 | | 68 | |
| 3 | Ladecontainer | 36 | | 69 | |
| 4 | Rollenbahn | 37 | | 70 | |
| 5 | Ladepforte | 38 | | 71 | |
| 6 | Laderaum | 39 | | 72 | |
| 7 | Raum | 40 | | 73 | |
| 8 | Ladebereich | 41 | | 74 | |
| 9 | Seitenwand | 42 | | 75 | |
| 10 | Stirnwand | 43 | | 76 | |
| 11 | Sensor | 44 | | 77 | |
| 12 | Cargoraum | 45 | | 78 | |
| 13 | Förderelement | 46 | | 79 | |
| 14 | Rollenbahn | 47 | | | |
| 15 | Rollenbahn | 48 | | | |
| 16 | Rolle | 49 | | | |
| 17 | | 50 | | | |
| 18 | | 51 | | a | Abstand |
| 19 | | 52 | | | |
| 20 | | 53 | | b | Breite |
| 21 | | 54 | | b₁ | Breite von |
| 22 | | 55 | | | |
| 23 | | 56 | | e | Eintrittslänge |
| 24 | | 57 | | e₁ | Länge |
| 25 | | 58 | | | |
| 26 | | 59 | | | |
| 27 | | 60 | | R | Flugzeug |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Beladen eines Flugzeuges (R) mit Ladecontainer (3), wobei diese auf Förderelementen (13) in das Innere des Flugzeugs (R) gelangen und dort in einem Ladebereich (8) gedreht werden,
**dadurch gekennzeichnet,**
**dass** im Lagebereich (8) mittels Sensoren (11) die Lage des Ladecontainers (3) automatisch ermittelt und die Förderelemente (13) über eine Steuerung entsprechend der ermittelten Lage zum Drehen des Ladecontainers (3) betrieben werden, wodurch der Ladecontainer (3) im Ladebereich automatisch um 90° gedreht wird.

2. Verfahren nach Anspruch 1, **dadurch gekennzeichnet, dass** die Lage des Ladecontainers (3) im Ladebereich (8) fortlaufend ermittelt wird.

3. Verfahren nach einem der Ansprüche 1 - 2, **dadurch gekennzeichnet, dass** die Lageermittlung berührungslos erfolgt.

4. Verfahren nach wenigstens einem der Ansprüche 1 - 3, **dadurch gekennzeichnet, dass** der Ladecontainer (3) in den Ladebereich (8) eingefahren wird, bis er einen vorbestimmten Abstand (a) von einem stirnwärtigen Referenzpunkt erreicht, danach gedreht wird, bis er einen bestimmten Abstand von einem seitlichen Referenzpunkt einnimmt, wobei dieser Vorgang so lange widerholt wird, bis der Ladecontainer (3) seine gewünschte Endposition erreicht hat.

5. Vorrichtung zum Beladen eines Flugzeuges (R) mit Ladecontainer (3) welche auf Förderelemente (13) in das Innere des Flugzeuges (R) transportierbar und in einem Ladebereich (8) drehbar sind, **dadurch gekennzeichnet, dass** im Ladebereich (8) und/oder am Ladecontainer (3) Sensoren (11) zur Bestimmung der Lage des Containers (3) angeordnet, und dass die Förderelemente (13) und die Sensoren (11) mit einer Steuerung zur Abstimmung des Antriebs der Förderelemente (13) in Abhängigkeit von der durch die Sensoren (11) ermittelten Lage des Ladecontainers (3) verbunden sind, wodurch der Ladecontainer (3) im Ladebereich (8) automatisch um 90° drehbar ist.

6. Vorrichtung nach Anspruch 5, **dadurch gekennzeichnet, dass** es sich bei den Sensoren (11) um Annäherungssensoren handelt.

7. Vorrichtung nach Anspruch 5 oder 6, **dadurch gekennzeichnet, dass** die Sensoren (11) mit Ultraschall, Radar od. dgl. berührungslos arbeiten.

8. Vorrichtung nach einem der Ansprüche 5 - 7, **dadurch gekennzeichnet, dass** die Förderelemente (13) zumindest zum Teil mit einem Antrieb versehen sind.

9. Vorrichtung nach Anspruch 8, **dadurch gekennzeichnet, dass** einige Förderelemente (13, 14, 15) aus wenigstens einer Mehrzahl von PDU's (power drive units) bestehen oder die PDU's zwischen den passiven Förderelementen (13, 14, 15) angeordnet sind, wobei die PDU's aktiv angetrieben und die verbleibenden Förderelemente (13, 14, 15) passiv angetrieben sind.

10. Vorrichtung nach Anspruch 8 oder 9, **dadurch gekennzeichnet, dass** die Förderelemente (13) aus senkrecht zueinander angeordneten Rollenbahnen (14, 15) bestehen.

11. Vorrichtung nach Anspruch 10, **dadurch gekennzeichnet, dass** zumindest einzelne Rollen (16) dieser Rollenbahnen (14, 15) angetrieben sind.

12. Vorrichtung nach wenigstens einem der Ansprüche 5 - 11, **dadurch gekennzeichnet, dass** die Förderelemente (13) zumindest teilweise als Kugelmattenbereiche ausgebildet sind.

13. Vorrichtung nach Anspruch 12, **dadurch gekennzeichnet, dass** die Förderelemente (13), insbesondere ausgebildet als Kugelmattenbereich im Ladebereich (8) vorgesehen sind, wobei ggf. dazwischenliegende PDU's, ggf. drehbar, angeordnet sind.

14. Vorrichtung nach wenigstens einem der Ansprüche 9 - 13, **dadurch gekennzeichnet, dass** die PDU's aktiv angetrieben und zur Förderrichtung des Ladecontainers (3) kontinuierlich drehbar und ansteuerbar ausgebildet sind.

15. Vorrichtung nach wenigstens einem der Ansprüche 5 - 14, **dadurch gekennzeichnet, dass** die Sensoren (11) den Seitenwänden (9) und/oder Stirnwänden (10) und/oder Decken des Ladecontainers (3) angeordnet sind.

## Claims

1. Method of loading an aircraft (R) with freight containers (3), the latter passing into the interior of the aircraft (R) on conveyor members (13) and being rotated there in a loading area (8), **characterised in that** the position of the freight container (3) in the loading area (8) is determined automatically by means of sensors (11), and the conveyor members (13) are operated via a control system in accordance with the determined position to rotate the freight container (3), whereby the freight container (3) is rotated automatically through 90° in the loading area.

2. Method according to claim 1, **characterised in that** the position of the freight container (3) in the loading area (8) is determined continuously.

3. Method according to one of claims 1 - 2, **characterised in that** the determination of position takes place without contact.

4. Method according to at least one of claims 1 - 3, **characterised in that** the freight container (3) is introduced into the loading area (8) until it reaches a predetermined distance (a) from an end reference point, then it is rotated until it arrives at a specific distance from a lateral reference point, this operation being repeated until such time as the freight container (3) has reached its desired end position.

5. Apparatus for loading an aircraft (R) with freight containers (3), which are transportable into the interior of the aircraft (R) on conveyor members (13) and are rotatable in a loading area (8), **characterised in that** sensors (11) for determining the position of the container (3) are disposed in the loading area (8) and/or on the freight container (3), and **in that** the conveyor members (13) and the sensors (11) are connected to a control system for adjusting the drive of the conveyor members (13) in dependence on the position of the freight container (3) determined by the sensors (11), whereby the freight container (3) is rotatable automatically through 90° in the loading area (8).

6. Apparatus according to claim 5, **characterised in that** the sensors (11) are proximity sensors.

7. Apparatus according to claim 5 or 6, **characterised in that** the sensors (11) operate without contact by means of ultrasound, radar or the like.

8. Apparatus according to claims 5 - 7, **characterised in that** the conveyor members (13) are at least in part provided with a drive.

9. Apparatus according to claim 8, **characterised in that** some conveyor members (13, 14, 15) consist of at least a plurality of PDUs (power drive units), or the PDUs are disposed between the passive conveyor members (13, 14, 15), the PDUs being actively driven, and the remaining conveyor members (13, 14, 15) being passively driven.

10. Apparatus according to claim 8 or 9, **characterised in that** the conveyor members (13) consist of roller conveyors (14, 15) disposed perpendicularly relative to one another.

11. Apparatus according to claim 10, **characterised in that** at least individual rollers (16) of these roller conveyors (14, 15) are driven.

12. Apparatus according to at least one of claims 5 - 11, **characterised in that** the conveyor members (13) are at least partially in the form of ball mat areas.

13. Apparatus according to claim 12, **characterised in that** the conveyor members (13), formed in particular as ball mat areas, are provided in the loading area (8), any PDUs lying between them optionally being rotatably disposed.

14. Apparatus according to at least one of claims 9 - 13, **characterised in that** the PDUs are actively driven and are designed to be continuously rotatable and controllable relative to the conveying direction of the freight container (3).

15. Apparatus according to at least one of claims 5 - 14, **characterised in that** the sensors (11) are disposed on the side walls (9) and/or end walls (10) and/or ceiling of the freight container (3).

## Revendications

1. Procédé pour le chargement d'un aéronef (R) avec des containers de chargement (3) qui arrivent sur des éléments transporteurs (13) à l'intérieur de l'aéronef (R) où ils pivotent dans une zone de chargement (8).
**caractérisé en ce que**
la position du container de chargement (3) est déterminée automatiquement par des capteurs (11) dans la zone de chargement (8) et les éléments transporteurs (13) sont utilisés pour tourner le container de chargement (3) via une commande en fonction de la position calculée, ce qui entraîne le pivotement automatique de 90° du container de chargement (3) dans la zone de chargement.

2. Procédé selon la revendication 1,
**caractérisé en ce que**
la position du container de chargement (3) dans la zone de chargement (8) est déterminée en continu.

3. Procédé selon l'une quelconque des revendications 1 - 2,
**caractérisé en ce que**
le calcul de la position a lieu sans contact.

4. Procédé selon au moins une des revendications 1 - 3,
**caractérisé en ce que**
le container de chargement (3) est amené dans la zone de chargement (8) jusqu'à ce qu'il soit à une distance prédéterminée (a) d'un point de référence côté paroi d'extrémité, il est ensuite pivoté jusqu'à ce qu'il soit à une certaine distance d'un point de référence latéral, ce procédé étant répété jusqu'à ce que le container de chargement (3) atteigne sa position finale souhaitée.

5. Dispositif pour le chargement d'un aéronef (R) avec des containers de chargement (3) qui peuvent être transportés sur des éléments transporteurs (13) à l'intérieur de l'aéronef (R) et être tournés dans une zone de chargement (8),
**caractérisé en ce que**
des capteurs (11) de détermination de la position du container (3) sont positionnés dans la zone de chargement (8) et/ou contre le container de chargement (3) et les éléments transporteurs (13) et les capteurs (11) sont reliés à une commande d'ajustement de l'entraînement des éléments entraîneurs (13) en fonction de la position du container de chargement (3) calculée par les capteurs (11), le container de chargement (3) pouvant être tourné automatiquement de 90° dans la zone de chargement (8).

6. Dispositif selon la revendication 5,
**caractérisé en ce que**
les capteurs (11) sont des capteurs d'approche.

7. Dispositif selon la revendication 5 ou 6,
**caractérisé en ce que**
les capteurs (11) fonctionnent sans contact par ultrasons, radar ou similaires.

8. Dispositif selon l'une quelconque des revendications 5 - 7,
**caractérisé en ce que**
les éléments transporteurs (13) sont dotés au moins partiellement d'un entraînement.

9. Dispositif selon la revendication 8,
**caractérisé en ce que**
certains éléments transporteurs (13, 14, 15) se composent d'au moins une pluralité de PDU (power drive units) ou les PDU sont disposés entre les éléments transporteurs passifs (13, 14, 15), les PDU étant entraînés activement et les éléments transporteurs restant (13, 14, 15) étant entraînés passivement.

10. Dispositif selon la revendication 8 ou 9,
**caractérisé en ce que**
les éléments transporteurs (13) se composent de transporteurs à galet (14, 15) disposés à la verticale les uns par rapport aux autres.

11. Dispositif selon la revendication 10,
**caractérisé en ce qu'**
au moins des rouleaux indépendants (16) de ces transporteurs à galets (14, 15) sont entraînés.

12. Dispositif selon au moins une des revendications 5 - 11,
**caractérisé en ce que**
les éléments transporteurs (13) sont formés au moins partiellement en tant que zones de tapis à billes.

13. Dispositif selon la revendication 12,
**caractérisé en ce que**
les éléments transporteurs (13), notamment ceux conçus en tant que zone de tapis à billes dans la zone de chargement (8), sont prévus avec des PDU intercalés et disposés de manière à pouvoir pivoter le cas échéant.

14. Dispositif selon au moins une des revendications 9 - 13,
**caractérisé en ce que**
les PDU sont entraînés activement et sont conçus de manière à pouvoir tourner ou à pouvoir être amorcés en continue dans la direction de transport du container de chargement (3).

15. Dispositif selon au moins une des revendications 5 - 14,
**caractérisé en ce que**
les capteurs (11) sont associés aux parois latérales (9) et/ou aux parois d'extrémité (10) et/ou aux enveloppes du container de chargement (3).
